(19) Europäisches Patentamt
European Patent Office
Office européen des brevets

(11) **EP 4 254 769 A1**

(12) **EUROPEAN PATENT APPLICATION**

(43) Date of publication:
**04.10.2023 Bulletin 2023/40**

(21) Application number: **22166021.0**

(22) Date of filing: **31.03.2022**

(51) International Patent Classification (IPC):
*H02M 7/493* (2007.01)  *H02J 3/38* (2006.01)
*H02J 3/50* (2006.01)  *H02M 1/42* (2007.01)

(52) Cooperative Patent Classification (CPC):
**H02M 7/493; H02J 3/38; H02J 3/50;** H02M 1/0025;
H02M 1/42

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Danfoss Editron Oy
53600 Lappeenranta (FI)**

(72) Inventors:
• SUMMANEN, Antti
 53600 Lappeenranta (FI)
• TARKIAINEN, Antti
 53600 Lappeenranta (FI)

(74) Representative: **Väänänen, Janne Kalervo
Vanarix Oy
Laaksolahdentie 74
02730 Espoo (FI)**

(54) **A METHOD AND A CONTROL SYSTEM FOR CONTROLLING PARALLEL CONNECTED POWER CONVERTERS**

(57) A control system for controlling parallel connected power converters comprises a data processing system (101-103) configured to form, for each power converter, a reactive power indicator ($I_{react\_n}$) based on data indicative of reactive power ($Q_{\_n}$) of the power converter, form an arithmetic average ($I_{react\_ave}$) of the reactive power indicators of the power converters, form, for each of the power converters, an unbalance indicator ($e_{dm\_n}$) based on a difference ($I_{react\_n} - I_{react\_ave}$) between the reactive power indicator of the power converter and the arithmetic average, and control an alternating voltage amplitude reference ($U_{AC,ref\_n}$) of a converter stage of each of the power converters based on at least the unbalance indicator of the power converter. The use the arithmetic average reduces undesired voltage drift of the power converters when balancing the reactive powers of the power converters.

Figure 1a

EP 4 254 769 A1

## Description

### Field of the disclosure

The disclosure relates generally to control of power converters which constitute a part of an alternating current "AC" system e.g. a microgrid. More particularly, the disclosure relates to a control system and to a method for controlling power converters whose alternating voltage terminals are connected to each other. Furthermore, the disclosure relates to a power converter. Furthermore, the disclosure relates to a computer program for controlling power converters whose alternating voltage terminals are connected to each other.

### Background

In many cases, an alternating current "AC" system, such as a microgrid, is supplied with power converters whose alternating voltage terminals are connected to each other. Each of the power converters can be fed with for example a direct current "DC" energy source through an intermediate direct voltage link of the power converter. The DC energy source may comprise for example a battery, a fuel cell, and/or a genset comprising a rectifier and a generator driven by a combustion engine, a wind turbine, a hydro turbine, or some other prime mover. Each of the power converters is configured to convert the direct voltage of its direct voltage link into one or more alternating voltages e.g. into three-phase alternating voltage.

One of the reasons for paralleling power converters in the above-described way is a desire to have redundancy so that in a failure situation where one of the power converters becomes inoperable the remaining power converters can continue feeding an AC load but with reduced total power. The paralleling also makes it possible to use smaller power converters and smaller energy sources to provide the power needed by the AC load.

The parallel connected power converters create an AC voltage grid, and they must maintain frequency and voltage of the AC voltage grid at their setpoints with a sufficient accuracy. The typical setpoints are for example 400 V root-mean-square "RMS" line-to-line voltage and 50 Hz frequency. The AC load connected to the AC voltage grid draws active power and reactive power from the AC voltage grid. To allow advantageous paralleling of several power converters, the power converters should balance their loads equally or in another desired way between the power converters. In many cases, the need for balancing relates not only to active power but to reactive power, too.

In a traditional solution for balancing reactive power between parallel connected power converters, one of the power converters acts as a master which determines the AC voltage of the AC voltage grid whereas the other power converters act as slaves which control their AC voltage references so that desired sharing of reactive power is achieved. A failure in the master would render the whole system inoperable, or the system should have a mechanism for dynamically changing the master on fly in a reliable way. The mechanism for dynamically changing the master may, in turn, involve its own technical challenges.

### Summary

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new control system for controlling power converters whose alternating voltage terminals are connected to each other. The power converters may constitute for example an alternating current "AC" microgrid.

A control system according to the invention comprises a data processing system configured to:

- form, for each of the power converters, a reactive power indicator based on data indicative of reactive power of the power converter,

- form an arithmetic average of the reactive power indicators of the power converters,

- form, for each of the power converters, an unbalance indicator based on a difference between the reactive power indicator of the power converter and the arithmetic average of the reactive power indicators of the power converters, and

- control an alternating voltage amplitude reference of a converter stage of each of the power converters based on at least the unbalance indicator of the power converter.

The amplitude of the actual AC voltage at the parallel connected alternating voltage terminals is not substantially affected by the balancing of the reactive powers of the power converters because the above-mentioned unbalance indicators are based on deviations from the arithmetic average of the reactive power indicators. The deviations from the arithmetic average cancel each other and thus their combined effect on the amplitude of the actual AC voltage can be small and undesired drift of the amplitude of the actual AC voltage can be avoided.

As the power converters can be controlled in the same way with respect to each other, there can be redundancy so that in a failure situation where one of the power converters becomes inoperable the remaining power converter or converters can continue feeding an AC load but with reduced total power.

In a control system according to an advantageous and non-limiting embodiment, the above-mentioned data processing system is constituted by data processors of the power converters and the control system comprises a data transfer network configured to transfer the reactive power indicator of each power converter from the data processor of the power converter under consideration to the data processor or processors of the other power converter or converters.

In accordance with the invention, there is also provided a new electric power system that comprises:

- power converters whose alternating voltage terminals are connected to each other, each of the power converters comprising a converter stage configured to form one or more alternating voltages, a driver stage configured to control the converter stage to form the one or more alternating voltages in accordance with an alternating voltage amplitude reference expressing amplitude of the one or more alternating voltages formed by the converter stage, and a line filter between the converter stage and the alternating voltage terminals, and

- a control system according to the invention and configured to determine the alternating voltage amplitude references of the power converters.

In accordance with the invention, there is also provided a new power converter that comprises:

- a converter stage configured to form one or more alternating voltages,

- a driver stage configured to control the converter stage to form the one or more alternating voltages in accordance with an alternating voltage amplitude reference expressing amplitude of the one or more alternating voltages, and

- a data processor configured to form a local reactive power indicator based on data indicative of reactive power supplied by the power converter to an electric system external to the power converter,

wherein the data processor is configured to:

- receive one or more other reactive power indicators from a data transfer network,

- transmit the local reactive power indicator to the data transfer network,

- form an arithmetic average of the local reactive power indicator and the received one or more other reactive power indicators,

- form an unbalance indicator based on a difference between the local reactive power indicator and the arithmetic average, and

- control the alternating voltage amplitude reference based on at least the unbalance indicator.

A power converter according to an exemplifying and non-limiting embodiment further comprises a line filter connected to the converter stage. It is however also possible that the line filter is a part of an electric system to which the power converter is connectable. The word "line filter" is to be understood broadly so that e.g. primary and secondary stray inductances of a transformer may constitute a line filter.

In accordance with the invention, there is also provided a new method for controlling power converters whose alternating voltage terminals are connected to each other. A method according to the invention comprises:

- forming, for each of the power converters, a reactive power indicator based on data indicative of reactive power of the power converter,

- forming an arithmetic average of the reactive power indicators of the power converters,

- forming, for each of the power converters, an unbalance indicator based on a difference between the reactive power indicator of the power converter and the arithmetic average of the reactive power indicators of the power converters, and

- controlling an alternating voltage amplitude reference of a converter stage of each of the power converters based on at least the unbalance indicator of the power converter.

In accordance with the invention, there is also provided a new computer program for controlling power converters whose alternating voltage terminals are connected to each other. A computer program according to the invention comprises computer executable instructions for controlling a programmable data processing system to:

- form, for each of the power converters, a reactive power indicator based on data indicative of reactive power of the power converter,

- form an arithmetic average of the reactive power indicators of the power converters,

- form, for each of the power converters, an unbalance indicator based on a difference between the reactive power indicator of the power converter and the arithmetic average of the reactive power indicators of the power converters, and

- control an alternating voltage amplitude reference of a converter stage of each of the power converters based on at least the unbalance indicator of the power converter.

In accordance with the invention, there is also provided a new computer program product. The computer program product comprises a non-volatile computer readable medium, e.g. a compact disc "CD", encoded with a computer program according to the invention.
Exemplifying and non-limiting embodiments are described in accompanied dependent claims.
Exemplifying and non-limiting embodiments both as to constructions and to methods of operation, together with additional objects and advantages thereof, will be best understood from the following description of specific exemplifying and non-limiting embodiments when read in conjunction with the accompanying drawings.
The verbs "to comprise" and "to include" are used in this document as open limitations that neither exclude nor require the existence of un-recited features.
The features recited in dependent claims are mutually freely combinable unless otherwise explicitly stated.
Furthermore, it is to be understood that the use of "a" or "an", i.e. a singular form, throughout this document does not exclude a plurality.

**Brief description of the figures**

Exemplifying and non-limiting embodiments and their advantages are explained in greater detail below in the sense of examples and with reference to the accompanying drawings, in which:

figure 1a illustrates an electric power system that comprises a control system according to an exemplifying and non-limiting embodiment for controlling power converters of the electric power system,

figure 1b illustrates a functional block diagram of a part of the control system configured to control one of the power converters of the electric power system illustrated in figure 1a,

figure 2 illustrates an electric power system that comprises a control system according to an exemplifying and non-limiting embodiment for controlling power converters of the electric power system, and

figure 3 shows a flowchart of a method according to an exemplifying and non-limiting embodiment for controlling power converters whose alternating voltage terminals are connected to each other.

**Description of exemplifying and non-limiting embodiments**

The specific examples provided in the description below should not be construed as limiting the scope and/or the applicability of the accompanied claims. Lists and groups of examples provided in the description are not exhaustive unless otherwise explicitly stated.

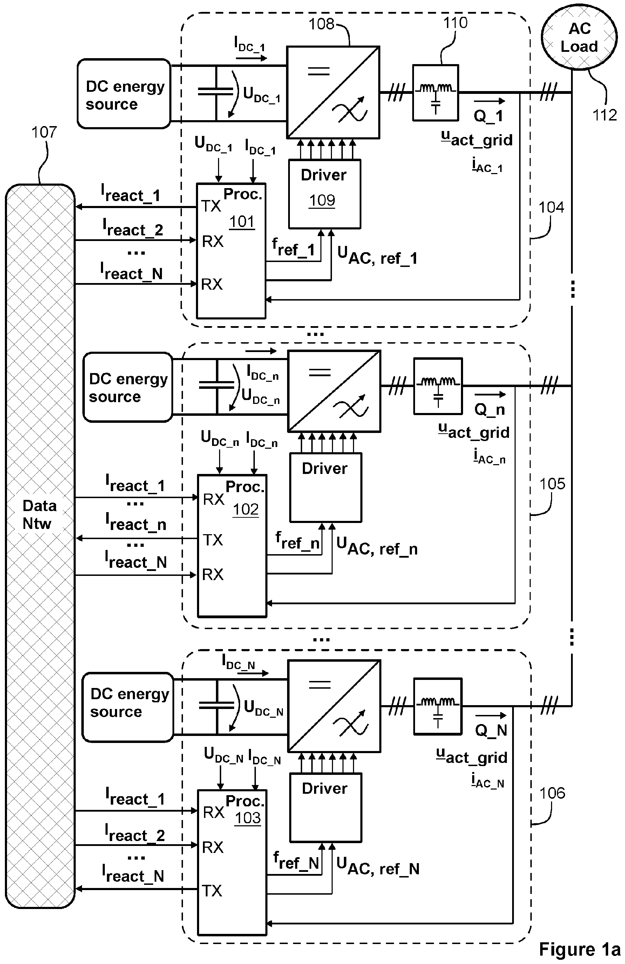

Figure 1a illustrates an electric power system according to an exemplifying and non-limiting embodiment. The electric power system comprises power converters whose alternating voltage terminals are connected to each other. In figure 1a, three of the power converters are denoted with references 104, 105, and 106. In this exemplifying case, each of the power converters is configured to transfer electric power from a direct current "DC" energy source to an alternating current "AC" load 112. Each DC energy source may comprise for example a battery system, a fuel cell system, a photovoltaic panel system, and/or a genset comprising a rectifier and a generator driven by a combustion engine, a wind turbine, a hydro turbine, or some other prime mover. It is also possible that one or more of the power converters is/are capable of transferring electric power from its/their alternating voltage terminals to the respective DC energy source for example in a case in which the DC energy source under consideration is a battery system which is charged by electric power supplied by one or more other DC energy sources of the electric power system.

Each of the power converters comprises a converter stage configured to convert direct voltage $U_{DC\_1}$, ..., $U_{DC\_N}$ of a direct voltage link of the power converter into three-phase alternating voltage. It is however also possible that the number of phases of the AC load 112 and thereby the number of phases of the converter stages of the power converters is less than three or greater than three. The converter stage of the power converter 104 is denoted with a reference 108 in figure 1a. The converter stage of each of the power converters can be e.g. an inverter bridge implemented with controllable semiconductor components such as e.g. insulated gate bipolar transistors "IGBT" or gate turn off "GTO" thyristors, and possibly with diodes that are antiparallel with the controllable semiconductor components.

In the exemplifying electric power system illustrated in figure 1a, each of the power converters comprises a line filter between the converter stage and the alternating voltage terminals of the power converter. The line filter can be for example an inductor-capacitor-inductor "LCL" filter. The line filter of the power converter 104 is denoted with reference 110.

Each of the power converters comprises a driver stage configured to control the converter stage to form the three-phase alternating voltage in accordance with a respective alternating "AC" voltage amplitude reference $U_{AC,ref\_1}$, ... or, $U_{AC,ref\_N}$ that expresses amplitude of the three-phase alternating voltage and in accordance with a respective frequency reference $f_{ref\_1}$, ... or, $f_{ref\_N}$ that expresses frequency of the three-phase alternating voltage. The driver stage of the power converter 104 is denoted with a reference 109 in figure 1a. The three-phase alternating voltage can be produced for example by forming phase voltage references and running pulse width modulation "PWM" in accordance with the phase voltage references. The PWM results in phase voltages that constitute the three-phase alternating voltage. There are also other techniques to form the three-phase alternating voltage using PWM, e.g. space-vector modulation.

The electric power system comprises a control system according to an exemplifying and non-limiting embodiment. The control system comprises a data processing system configured to determine the AC voltage amplitude references $U_{AC,ref\_1}$, ..., $U_{AC,ref\_N}$ of the power converters. In this exemplifying case, the data processing system is constituted by data processors of the power converters. In figure 1a, the data processors of the power converters 104, 105, and 106 are denoted with references 101, 102, and 103. The data processors of the power converters are communicatively connected to each other via a data transfer network 107 that can be e.g. a field bus.

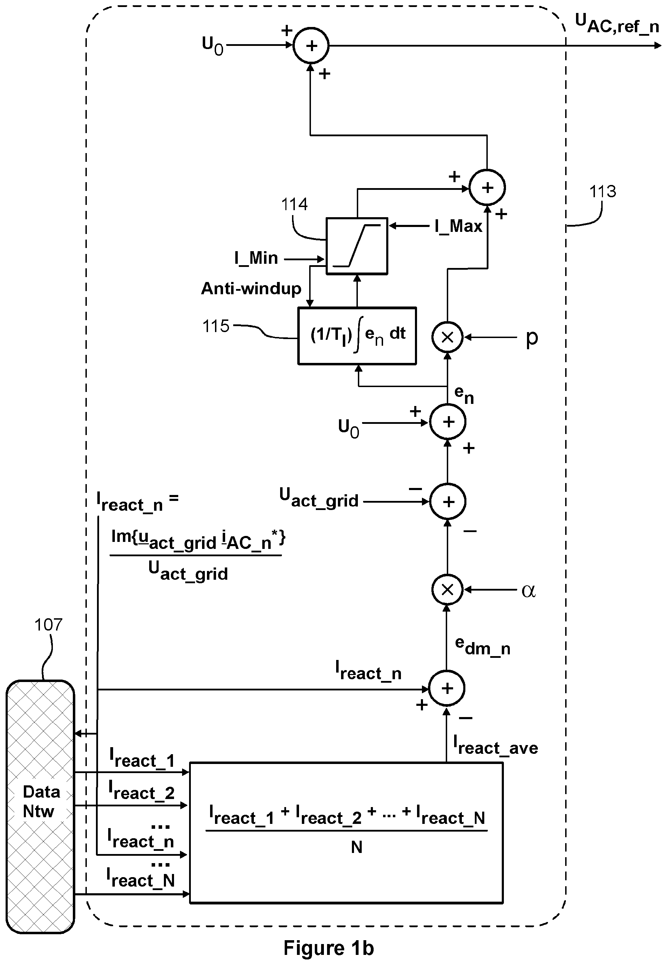

Figure 1b illustrates a functional block diagram of a part of the control system that determines the AC voltage amplitude reference $U_{AC,ref\_n}$ of the power converter 105 which is the $n^{th}$ one of the power converters of the electric power system. The functionality that is inside a block 113 can be implemented with the data processor 102. Without limiting the generality, the considerations below can be limited to the data processor 102 only because the data processors of the other power converters can be configured to implement the same functionality for determining the AC voltage amplitude references $U_{AC,ref\_1}$, ..., $U_{AC,ref\_n-1}$, $U_{AC,ref\_n+1}$, ..., $U_{AC,ref\_N}$ for the other power converters.

The data processor 102 is configured to form a reactive power indicator $I_{react\_n}$ based on data indicative of reactive power $Q_n$ supplied by the power converter 105. The reactive power indicator $I_{react\_n}$ can be for example directly proportional to reactive current supplied by the power converter 105. It is also possible that the reactive power indicator of each of the power converters is directly proportional to the reactive power supplied by the power converter. The data processor 102 can be configured to compute the reactive power indicator $I_{react\_n}$ for example according to the following formula:

$$I_{react\_n} = Im\{\underline{u}_{act\_grid}\ \underline{i}_{AC\_n}{}^*\} / U_{act\_grid}, \tag{1}$$

where $\underline{u}_{act\_grid}$ is a space-vector of the actual three-phase AC voltage at the parallel connected alternating voltage terminals of the power converters, $\underline{i}_{AC\_n}{}^*$ is a complex conjugate of a space-vector of AC currents supplied by the power converter 105, $\underline{u}_{act\_grid}$ is the amplitude of the actual three-phase AC voltage at the parallel connected AC voltage terminals of the power converters i.e. $\underline{u}_{act\_grid}$ is the absolute value of the space-vector $\underline{u}_{act\_grid}$, and Im{ } means an imaginary part of a complex number.

The data processor 102 comprises a first data interface RX configured to receive the reactive power indicators $I_{react\_1}$, ..., $I_{react\_n-1}$, $I_{react\_n+1}$, ..., $I_{react\_N}$ of the other power converters via the data transfer network 107. Furthermore, the data processor 102 comprises a second data interface TX configured to transmit the reactive power indicator $I_{react\_n}$ to the other power converters via the data transfer network 107. The data processor 102 is configured to form an arithmetic average $I_{react\_ave}$ of all the reactive power indicators of the power converters, including its own reactive power indicator $I_{react\_n}$. The data processor 102 is configured to form an unbalance indicator $e_{dm\_n}$ based on a difference $I_{react\_n} - I_{react\_ave}$ between the reactive power indicator of the power converter 105 and the arithmetic average of the reactive power indicators of the power converters, and to control the AC voltage amplitude reference $U_{AC,ref\_n}$ of the converter stage of the power converter 105 based on at least the unbalance indicator $e_{dm\_n}$.

The amplitude $U_{act\_grid}$ of the actual three-phase AC voltage is not substantially affected by the balancing of the reactive powers of the power converters because each unbalance indicator is based on a deviation of a corresponding reactive power indicator from the arithmetic average of the reactive power indicators. The deviations from the arithmetic average cancel each other, and thus their combined effect on the amplitude $U_{act\_grid}$ of the actual three-phase AC voltage can be small and undesired drift of the amplitude $U_{act\_grid}$ of the actual AC voltage can be avoided even if none of the power converters acts as a master and/or there is no higher-level controller for controlling the AC voltage amplitude references of the power converters in a centralized way.

In a control system according to an exemplifying and non-limiting embodiment, the data processor 102 is configured to determine the AC voltage amplitude reference $U_{AC,ref\_n}$ according to the following formulas:

$$I_{react\_ave} = \sum_{i=1...N} I_{react\_i} / N, \qquad (2)$$

$$e_{dm\_n} = I_{react\_n} - I_{react\_ave}, \text{ and} \qquad (3)$$

$$U_{AC,ref\_n} = U_0 + p(U_0 - \alpha\, e_{dm\_n} - U_{act\_grid}) + (1/T_I) \int (U_0 - \alpha\, e_{dm\_n} - U_{act\_grid}) dt$$

$$(4)$$

where N is the number of the power converters, $I_{react\_ave}$ is the arithmetic average of the reactive power indicators of the power converters, $I_{react\_n}$ is the reactive power indicator of the power converter 105, $e_{dm\_n}$ is the unbalance indicator of the power converter 105, $U_0$ is a base value of the alternating voltage amplitude e.g. $\sqrt{2} \times 400V$ as line-to-line voltage, $U_{act\_grid}$ is the amplitude of the actual three-phase voltage at the AC voltage terminals of the power converters, $\alpha$ is a control parameter of the unbalance indicator, p is a proportion coefficient of an proportional-integrative "PI" controller, and $T_I$ is an integration time of the PI controller.

In the exemplifying control system illustrated with the aid of figure 1b, the data processor 102 is configured to limit the integral term of the PI controller to be at least a predetermined lower limit I_Min and at most a predetermined upper limit I_Max. In figure 1b, the limitation of the integral term is depicted with a limiter block 114. The data processor 102 is advantageously configured to implement an anti-windup functionality that prevents an absolute value of a time integral 115 from increasing in a situation in which the limiter block 114 is active.

In the exemplifying control system illustrated in figure 1a, the data processors of the power converters are configured to determine the frequency references $f_{ref\_1}$, ..., $f_{ref\_N}$ which define the instantaneous frequencies of the three-phase AC voltages produced by the converter stages of the power converters. The frequency references can be determined for example with frequency drooping so that the frequency reference of each power converter is changed by a frequency droop value of the power converter. The frequency droop value is dependent on active power supplied by the power converter, and the frequency droop value decreases the frequency reference when a power flow direction is outwards from the power converter to the AC load 112. Correspondingly, the frequency droop value increases the frequency reference when the power flow direction is opposite so that the alternating voltage terminals of the power converter receive active power. It is also possible that the frequency references $f_{ref\_1}$, ..., $f_{ref\_N}$ are determined in some other suitable way. The invention is not limited to any specific ways to determine the frequency references.

The implementation of each of the data processors of the power converters, e.g. the data processors 101-103, can be based on one or more analogue circuits, one or more digital processing circuits, or a combination thereof. Each digital processing circuit can be a programmable processor circuit provided with appropriate software, a dedicated hardware processor such as for example an application specific integrated circuit "ASIC", or a configurable hardware processor such as for example a field programmable gate array "FPGA". Furthermore, the data processor may comprise one or more memory circuits each of which can be for example a random-access memory "RAM" circuit.

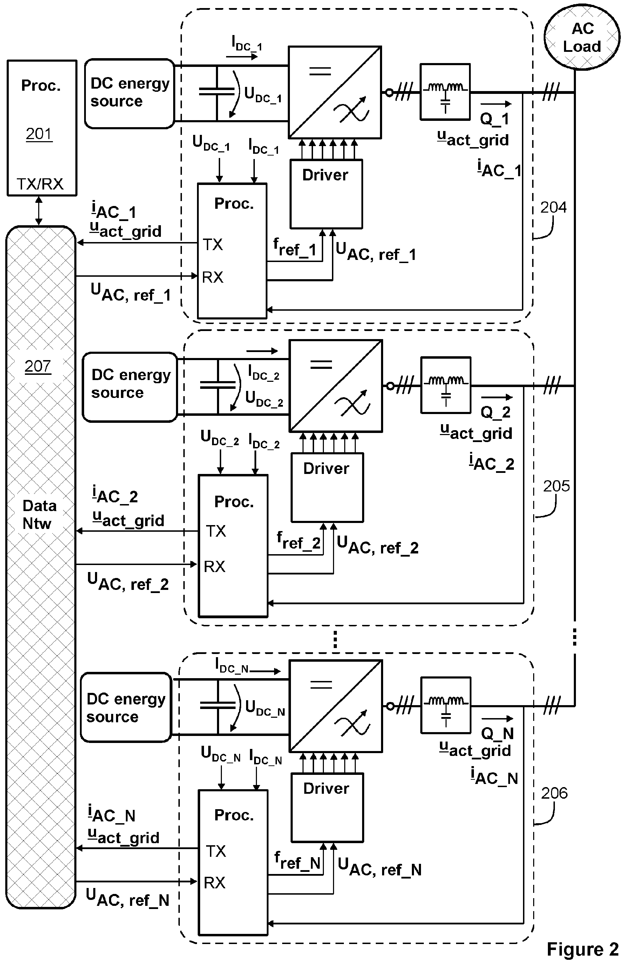

The exemplifying control system illustrated in figure 1a has a distributed architecture so that the data processing system is implemented with the data processors of the power converters, such as the data processors 101-103. Figure 2 illustrates an electric power system that comprises a control system according to another exemplifying and non-limiting embodiment. The electric power system comprises power converters whose alternating voltage terminals are connected to each other. In figure 2, three of the power converters are denoted with references 204, 205, and 206. In this exemplifying case, each of the power converters is configured to transfer electric power from a direct current "DC" energy source to an alternating current "AC" load. The control system comprises a data processing system configured to determine the AC voltage amplitude references $U_{AC,ref\_1}$, ..., $U_{AC,ref\_N}$ of the power converters. In this exemplifying case, the data processing system has a centralized architecture so that the data processing system comprises a data processor 201 that is configured to determine the AC voltage amplitude references $U_{AC,ref\_1}$, ..., $U_{AC,ref\_N}$ of all the power converters. Furthermore, the control system comprises a data transfer network 207 configured to transfer the AC voltage amplitude references $U_{AC,ref\_1}$, ..., $U_{AC,ref\_N}$ from the data processor 201 to the respective power converters and to transfer data indicative of reactive powers of the power converters from the power converters to the data processor 201. The data processor 201 can be configured to determine the AC voltage amplitude references $U_{AC,ref\_1}$, ..., $U_{AC,ref\_N}$ for example according to the above-presented formulas 1-4 so that n = 1, ..., N.

The implementation of the data processor 201 shown in figure 2 can be based on one or more analogue circuits, one or more digital processing circuits, or a combination thereof. Each digital processing circuit can be a programmable processor circuit provided with appropriate software, a dedicated hardware processor such as for example an application specific integrated circuit "ASIC", or a configurable hardware processor such as for example a field programmable gate array "FPGA". Furthermore, the data processor 201 may comprise one or more memory circuits each of which can be for example a random-access memory "RAM" circuit.

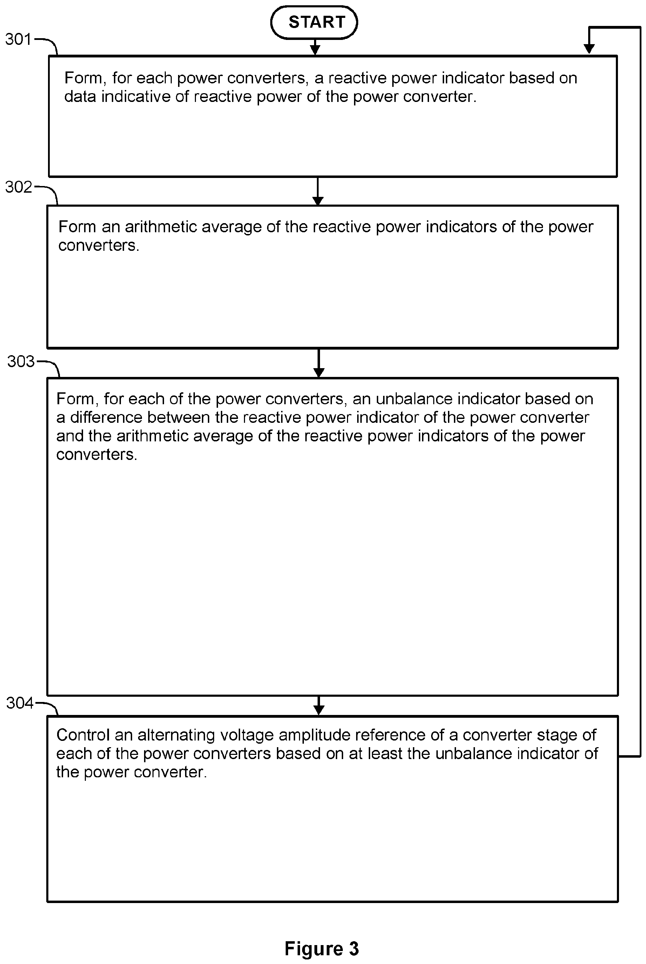

Figure 3 shows flowchart of a method according to an exemplifying and non-limiting embodiment for controlling power converters whose alternating voltage terminals are connected to each other. The method comprises the following actions:

- action 301: forming, for each of the power converters, a reactive power indicator based on data indicative of reactive power of the power converter,

- action 302: forming an arithmetic average of the reactive power indicators of the power converters,

- action 303: forming, for each of the power converters, an unbalance indicator based on a difference between the reactive power indicator of the power converter and the arithmetic average of the reactive power indicators of the power converters, and

- action 304: controlling an alternating voltage amplitude reference of a converter stage of each of the power converters based on at least the unbalance indicator of the power converter.

In a method according to an exemplifying and non-limiting embodiment, the reactive power indicator of each of the power converters is directly proportional to reactive current supplied by the power converter. It is also possible that the reactive power indicator of each of the power converters is directly proportional to the reactive power supplied by the power converter.

In a method according to an exemplifying and non-limiting embodiment, the alternating voltage amplitude reference of each of the power converters is decreased when the reactive power indicator of the power converter exceeds the arithmetic average of the reactive power indicators of the power converters, and the alternating voltage amplitude reference of the power converter is increased when the reactive power indicator of the power converter is below the arithmetic average of the reactive power indicators of the power converters.

In a method according to an exemplifying and non-limiting embodiment, the alternating voltage amplitude reference of each of the power converters is formed according to the following formulas so that n = 1, ..., the number N of the power converters:

$$I_{react\_ave} = \sum\nolimits_{i=1...N} I_{react\_i} / N,$$

$$e_{dm\_n} = I_{react\_n} - I_{react\_ave},$$

and

$$U_{AC,ref\_n} = U_0 + p(U_0 - \alpha\, e_{dm\_n} - U_{act\_grid}) + (1/T_I) \int (U_0 - \alpha\, e_{dm\_n} - U_{act\_grid})dt$$

where $I_{react\_ave}$ is the arithmetic average of the reactive power indicators of the power converters, $I_{react\_n}$ is the reactive power indicator of $n^{th}$ one of the power converters, $e_{dm\_n}$ is the unbalance indicator of the $n^{th}$ one of the power converters, $U_0$ is a base value of the alternating voltage amplitude, $U_{AC,ref\_n}$ is the alternating voltage amplitude reference of the $n^{th}$ one of the power converters, $U_{act\_grid}$ is the amplitude of the actual voltage at the alternating voltage terminals of the power converters, $\alpha$ is a control parameter of the unbalance indicator, p is a proportion coefficient of an proportional-integrative "PI" controller, and $T_I$ is an integration time of the PI controller.

A method according to an exemplifying and non-limiting embodiment comprises limiting an integral term of the PI controller to be at least a predetermined lower limit I_Min and at most a predetermined upper limit I_Max.

A method according to an exemplifying and non-limiting embodiment comprises preventing the absolute value of a time integral of the PI controller from increasing in response to a situation in which the integral term of the PI controller is limited to be the above-mentioned upper limit I_Max or the above-mentioned lower limit I_Min.

A computer program according to an exemplifying and non-limiting embodiment comprises computer executable instructions for controlling a programmable data processing system to carry out actions related to a method according to any of the above-described exemplifying and non-limiting embodiments.

A computer program according to an exemplifying and non-limiting embodiment comprises software modules for controlling power converters whose alternating voltage terminals are connected to each other. The software modules comprise computer executable instructions for controlling a programmable data processing system to:

- form, for each of the power converters, a reactive power indicator $I_{react\_n}$ based on data indicative of reactive power of the power converter,

- form an arithmetic average $I_{react\_ave}$ of the reactive power indicators of the power converters,

- form, for each of the power converters, an unbalance indicator based on a difference between the reactive power indicator of the power converter and the arithmetic average of the reactive power indicators of the power converters, and

- control an alternating voltage amplitude reference $U_{AC,ref\_n}$ of a converter stage of each of the power converters based on at least the unbalance indicator of the power converter.

The software modules can be for example subroutines or functions implemented with programming tools suitable for the programmable data processing system.

A computer program product according to an exemplifying and non-limiting embodiment comprises a computer readable medium, e.g. a compact disc "CD", encoded with a computer program according to an exemplifying embodiment of invention.

A signal according to an exemplifying and non-limiting embodiment is encoded to carry information defining a computer program according to an exemplifying embodiment of invention.

The specific examples provided in the description given above should not be construed as limiting the scope and/or the applicability of the appended claims. Lists and groups of examples provided in the description given above are not exhaustive unless otherwise explicitly stated.

**Claims**

1. A control system for controlling power converters (101-106, 201-206) whose alternating voltage terminals are connected to each other, the control system comprising a data processing system (101-103, 201) configured to:

   - form, for each of the power converters, a reactive power indicator ($I_{react\_n}$) based on data indicative of reactive power ($Q_n$) of the power converter,

   **characterized in that** the data processing system is configured to:

   - form an arithmetic average ($I_{react\_ave}$) of the reactive power indicators of the power converters,
   - form, for each of the power converters, an unbalance indicator ($e_{dm\_n}$) based on a difference ($I_{react\_n}$ - $I_{react\_ave}$) between the reactive power indicator of the power converter and the arithmetic average of the reactive power indicators of the power converters, and
- control an alternating voltage amplitude reference ($U_{AC,ref\_n}$) of a converter stage of each of the power converters based on at least the unbalance indicator of the power converter.

2. A control system according to claim 1, wherein the reactive power indicator ($I_{react\_n}$) of each of the power converters is directly proportional to reactive current supplied by the power converter.

3. A control system according to claim 1 or 2, wherein the data processing system is configured to decrease the alternating voltage amplitude reference ($U_{AC,ref\_n}$) of each of the power converters when the reactive power indicator of the power converter exceeds the arithmetic average of the reactive power indicators of the power converters, and to increase the alternating voltage reference ($U_{AC,ref\_n}$) of the power converter when the reactive power indicator of the power converter is below the arithmetic average of the reactive power indicators of the power converters.

4. A control system according to any one of claims 1-3, wherein the data processing system is configured to form the alternating voltage amplitude reference ($U_{AC,ref\_n}$) of each of the power converters according to the following formulas:

$$I_{react\_ave} = \sum\nolimits_{i=1...N} I_{react\_i} / N,$$

$$e_{dm\_n} = I_{react\_n} - I_{react\_ave},$$

and

$$U_{AC,ref\_n} = U_0 + p(U_0 - \alpha\, e_{dm\_n} - U_{act\_grid}) + (1/T_I)\int(U_0 - \alpha\, e_{dm\_n} - U_{act\_grid})dt$$

where N is a number of the power converters, $I_{react\_ave}$ is the arithmetic average of the reactive power indicators of the power converters, $I_{react\_n}$ is the reactive power indicator of $n^{th}$ one of the power converters, $e_{dm\_n}$ is the unbalance indicator of the $n^{th}$ one of the power converters, $U_0$ is a base value of the alternating voltage amplitude, $U_{AC,ref\_n}$ is the alternating voltage amplitude reference of the $n^{th}$ one of the power converters, $U_{act\_grid}$ is amplitude of actual voltage at the alternating voltage terminals of the power converters, $\alpha$ is a control parameter of the unbalance indicator, p is a proportion coefficient of an proportional-integrative controller, and $T_I$ is an integration time of the proportional-integrative controller.

5. A control system according to any one of claims 1-4, wherein the data processing system comprises data processors (101-103) each being configured to control one of the power converters and each of the power converters being controlled by one of the data processors, and the control system comprises a data transfer network (107) configured to transfer the reactive power indicator ($I_{react\_n}$) of each of the power converters from the data processor controlling the power converter to other one or ones of the data processors controlling other one or ones of the power converters.

6. A control system according to any one of claims 1-4, wherein the data processing system comprises a data processor (201) configured to control the power converters, and the control system comprises a data transfer network (207) configured to transfer the alternating voltage amplitude references ($U_{AC,ref\_1}, ..., U_{AC,ref\_N}$) from the data processor to the power converters and to transfer the data indicative of reactive powers ($Q_1,..., Q_N$) of the power converters from the power converters to the data processor.

7. An electric power system comprising:

   - power converters (104-106, 204-206) whose alternating voltage terminals are connected to each other, each of the power converters comprising a converter stage (108) configured to form one or more alternating voltages, a driver stage (109) configured to control the converter stage to form the one or more alternating voltages in accordance with an alternating voltage amplitude reference ($U_{AC,ref\_n}$) expressing amplitude of the one or more alternating voltages formed by the converter stage (108), and a line filter (110) between the converter stage and the alternating voltage terminals, and
   - a control system according to any one of claims 1-6 and configured to determine the alternating voltage amplitude references of the power converters.

8. A power converter (104) comprising:

- a converter stage (108) configured to form one or more alternating voltages,
- a driver stage (109) configured to control the converter stage to form the one or more alternating voltages in accordance with an alternating voltage amplitude reference ($U_{AC,ref\_1}$) expressing amplitude of the one or more alternating voltages, and
- a data processor (101) configured to form a local reactive power indicator ($I_{react\_n}$) based on data indicative of reactive power ($Q_{\_1}$) supplied by the power converter to an electric system external to the power converter,

**characterized in that** the data processor is configured to:

- receive one or more other reactive power indicators ($I_{react\_2}$, ..., $I_{react\_N}$) from a data transfer network,
- transmit the local reactive power indicator ($I_{react\_1}$) to the data transfer network,
- form an arithmetic average ($I_{react\_ave}$) of the local reactive power indicator and the received one or more other reactive power indicators,
- form an unbalance indicator ($e_{dm\_1}$) based on a difference ($I_{react\_1} - I_{react\_ave}$) between the local reactive power indicator and the arithmetic average, and
- control the alternating voltage amplitude reference ($U_{AC,ref\_1}$) based on at least the unbalance indicator.

9. A method for controlling power converters whose alternating voltage terminals are connected to each other, the method comprising:

- forming (301), for each of the power converters, a reactive power indicator ($I_{react\_n}$) based on data indicative of reactive power ($Q\_n$) of the power converter,

**characterized in that** the method further comprises:

- forming (302) an arithmetic average ($I_{react\_ave}$) of the reactive power indicators of the power converters,
- forming (303), for each of the power converters, an unbalance indicator ($e_{dm\_n}$) based on a difference ($I_{react\_n} - I_{react\_ave}$) between the reactive power indicator of the power converter and the arithmetic average of the reactive power indicators of the power converters, and
- controlling (304) an alternating voltage amplitude reference ($U_{AC,ref\_n}$) of a converter stage of each of the power converters based on at least the unbalance indicator of the power converter.

10. A method according to claim 9, wherein the reactive power indicator ($I_{react\_n}$) of each of the power converters is directly proportional to reactive current supplied by the power converter.

11. A method according to claim 9 or 10, wherein the alternating voltage amplitude reference ($U_{AC,ref\_n}$) of each of the power converters is decreased when the reactive power indicator of the power converter exceeds the arithmetic average of the reactive power indicators of the power converters, and the alternating voltage amplitude reference ($U_{AC,ref\_n}$) of the power converter is increased when the reactive power indicator of the power converter is below the arithmetic average of the reactive power indicators of the power converters.

12. A method according to any one of claims 9-11, wherein the alternating voltage amplitude reference ($U_{AC,ref\_n}$) of each of the power converters is formed according to the following formulas:

$$I_{react\_ave} = \sum_{i=1...N} I_{react\_i} / N,$$

$$e_{dm\_n} = I_{react\_n} - I_{react\_ave},$$

and

$$U_{AC,ref\_n} = U_0 + p(U_0 - \alpha\, e_{dm\_n} - U_{act\_grid}) + (1/T_I)\int (U_0 - \alpha\, e_{dm\_n} - U_{act\_grid})dt$$

where N is a number of the power converters, $I_{react\_ave}$ is the arithmetic average of the reactive power indicators of the power converters, $I_{react\_n}$ is the reactive power indicator of $n^{th}$ one of the power converters, $e_{dm\_n}$ is the unbalance indicator of the $n^{th}$ one of the power converters, $U_0$ is a base value of the alternating voltage amplitude, $U_{AC,ref\_n}$ is the alternating voltage amplitude reference of the $n^{th}$ one of the power converters, $U_{act\_grid}$ is actual voltage amplitude at the alternating voltage terminals of the power converters, $\alpha$ is a control parameter of the unbalance indicator, p is a proportion coefficient of an proportional-integrative controller, and $T_I$ is an integration time of the proportional-integrative controller.

13. A computer program for controlling power converters whose alternating voltage terminals are connected to each other, the computer program comprising computer executable instructions for controlling a programmable data processing system to:

- form, for each of the power converters, a reactive power indicator ($I_{react\_n}$) based on data ($u_{act\_grid}$, $i_{AC\_n}$) indicative of reactive power ($Q\_n$) of the power converter,

**characterized in that** the computer program comprises computer executable instructions for controlling the programmable data processing system to:

- form an arithmetic average ($I_{react\_ave}$) of the reactive power indicators of the power converters,
- form, for each of the power converters, an unbalance indicator ($e_{dm\_n}$) based on a difference ($I_{react\_n} - I_{react\_ave}$) between the reactive power indicator of the power converter and the arithmetic average of the reactive power indicators of the power converters, and
- control an alternating voltage amplitude reference ($U_{AC,ref\_n}$) of a converter stage of each of the power converters based on at least the unbalance indicator of the power converter.

14. A non-volatile computer readable medium encoded with a computer program according to claim 13.

Figure 1a

**Figure 1b**

Figure 2

START

301 — Form, for each power converters, a reactive power indicator based on data indicative of reactive power of the power converter.

302 — Form an arithmetic average of the reactive power indicators of the power converters.

303 — Form, for each of the power converters, an unbalance indicator based on a difference between the reactive power indicator of the power converter and the arithmetic average of the reactive power indicators of the power converters.

304 — Control an alternating voltage amplitude reference of a converter stage of each of the power converters based on at least the unbalance indicator of the power converter.

**Figure 3**

Europäisches
Patentamt

European
Patent Office

Office européen
des brevets

# EUROPEAN SEARCH REPORT

Application Number

EP 22 16 6021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MONICA P ET AL: "Control strategies of parallel operated inverters in renewable energy application: A review", RENEWABLE AND SUSTAINABLE ENERGY REVIEWS, ELSEVIERS SCIENCE, NEW YORK, NY, US, vol. 65, 25 July 2016 (2016-07-25), pages 885-901, XP029707819, ISSN: 1364-0321, DOI: 10.1016/J.RSER.2016.06.075 * section 3. "current distribution control", and in particular paragraph 3.3 "average load sharing" * | 1-3,5-7, 9-11,13, 14 | INV. H02M7/493 H02J3/38 H02J3/50 H02M1/42 |
| A | TONG WEN ET AL: "Research on a New Technology of Controlling Parallel Inverters", 2016 3RD INTERNATIONAL CONFERENCE ON INFORMATION SCIENCE AND CONTROL ENGINEERING (ICISCE), IEEE, 8 July 2016 (2016-07-08), pages 1055-1059, XP032993455, DOI: 10.1109/ICISCE.2016.227 [retrieved on 2016-10-31] * p. 1056: formula (8) and text below * | 1-14 | |
| A | JP 2002 084759 A (SAWAFUJI ELECTRIC CO LTD; TOSHIBA CORP) 22 March 2002 (2002-03-22) * paragraphs [0001], [0002], [0005]; figure 1 * | 1-14 | TECHNICAL FIELDS SEARCHED (IPC) H02M H02J |

The present search report has been drawn up for all claims

| Place of search | Date of completion of the search | Examiner |
|---|---|---|
| Munich | 21 September 2022 | Hanisch, Thomas |

EPO FORM 1503 03.82 (P04C01)

## ANNEX TO THE EUROPEAN SEARCH REPORT
## ON EUROPEAN PATENT APPLICATION NO.

EP 22 16 6021

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2022

| Patent document cited in search report | Publication date | Patent family member(s) | Publication date |
|---|---|---|---|
| JP 2002084759 A | 22-03-2002 | NONE | |